(19) Europäisches Patentamt
European Patent Office
Office européen des brevets

(11) Veröffentlichungsnummer: **0 016 975**
**B1**

(12) # EUROPÄISCHE PATENTSCHRIFT

(45) Veröffentlichungstag der Patentschrift: **17.08.83**

(21) Anmeldenummer: **80101044.8**

(22) Anmeldetag: **03.03.80**

(51) Int. Cl.³: **C 09 B 43/10**, C 09 B 35/64, C 09 B 33/10, C 09 B 29/30, C 09 B 35/215, C 09 B 35/35, D 06 P 1/39, D 06 P 3/02, D 06 P 3/58

(54) **Polyazofarbstoffe sowie ihre Verwendung zum Färben von amino- und hydroxygruppenhaltigen Fasermaterialien und Leder.**

(30) Priorität: **16.03.79 DE 2910458**

(43) Veröffentlichungstag der Anmeldung: **15.10.80 Patentblatt 80/21**

(45) Bekanntmachung des Hinweises auf die Patenterteilung: **17.08.83 Patentblatt 83/33**

(84) Benannte Vertragsstaaten: **CH DE FR GB IT**

(56) Entgegenhaltungen:
**FR-A-1 523 475**
**FR-A-2 360 635**
**CHEMICAL ABSTRACTS, Band 91, Nr. 1, Juli 1979, Zusammenfassung Nr. 6386 f., Seite 67, Columbus, Ohio, U.S.A.**

(73) Patentinhaber: **BAYER AG, Zentralbereich Patente, Marken und Lizenzen, D-5090 Leverkusen 1, Bayerwerk (DE)**

(72) Erfinder: **Nickel, Horst, Dr., Fontanestrasse 23, D-5090 Leverkusen 1 (DE)**

**EP 0 016 975 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

BUNDESDRUCKEREI BERLIN

# Polyazofarbstoffe sowie ihre Verwendung zum Färben von amino- und hydroxygruppenhaltigen Fasermaterialien und Leder

Gegenstand der vorliegenden Erfindung sind neue Polyazofarbstoffe der Formel

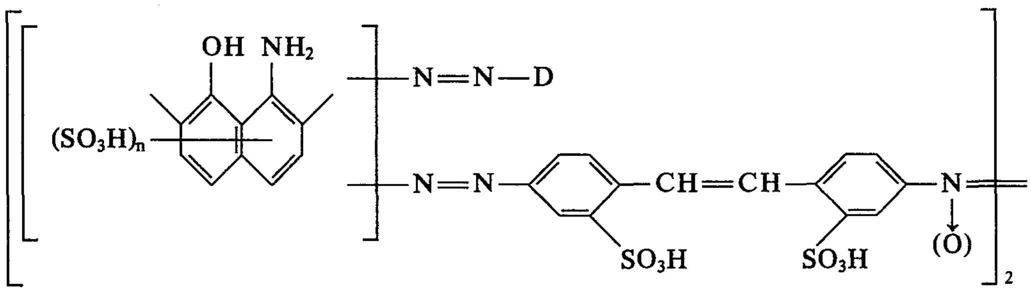
(I)

insbesondere solche der Formeln

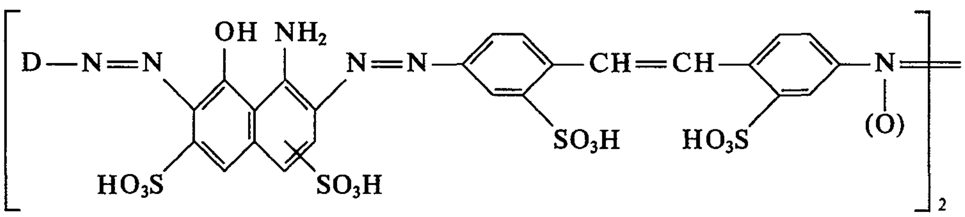
(II)

und

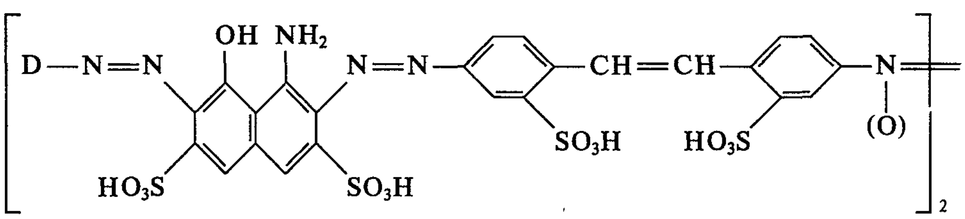
(III)

worin

D = Rest einer Diazokomponente
n = 1 oder 2.

Der Rest D kann aromatisch-carbocyclisch oder aromatisch-heterocyclisch sein. Bevorzugte Reste sind solche der Benzol- und Naphthalinreihe die übliche Substituenten enthalten können. Beispielhaft seien die folgenden genannt: $C_1-C_4$-Alkyl, $C_1-C_4$-Alkoxy, Halogen, insbesondere Cl und Br, Sulfo, Carboxy, Carbonsäureamid und Sulfonsäureamid (insbesondere die Mono- oder Di-$C_1-C_4$-Alkyl oder die Mono-arylamide), Sulfonamid, insbesondere Alkyl- und Arylsulfonylaminsulfonyl; Amino, Nitro, Acylamino, insbesondere $C_1-C_6$-Alkylcarbonyl und Arylcarbonylamino sowie die entsprechenden Sulfonyl-reste; Azogruppen, insbesondere Gruppen $-N=N-R$ mit R = Aryl (insbesondere gegebenenfalls substituiertes Phenyl oder Naphthyl).

Die Farbstoffe lassen sich nach bekannten Verfahren herstellen. Beispielhaft seien folgende genannt:

A. Reduktive Verknüpfung von 2 Molekülen

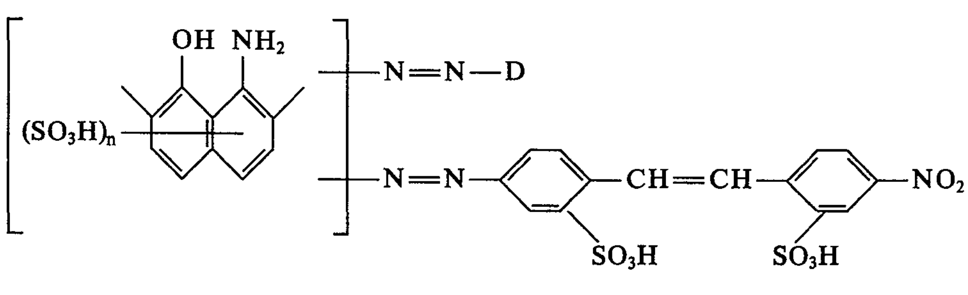
(IV)

Die Verbindungen (IV) sind ebenfalls Gegenstand der Erfindung.

Die Reduktion erfolgt in bekannter Weise, beispielsweise durch Behandlung der Nitro-Verbindung IV

in stark alkalischem Medium vorzugsweise 2–5%igem natronalkalischem Medium mit schwach reduzierend wirkenden Mitteln, vorzugsweise Glucose oder Hydrazin, bei Temperaturen von 40 bis 90°C, vorzugsweise 50 bis 80°C, gegebenenfalls in Anwesenheit von Reduktionsförderern wie Naphthochinonen. Die Reaktion führt im allgemeinen zu einem Gemisch mit unterschiedlichen Anteilen der Azo- und/bzw. Azoxyverbindungen

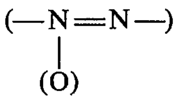

(siehe auch Houben-Weyl X/3, Seite 346–349, Georg Thieme Verlag, Stuttgart, 1965).

Die Herstellung von (IV) erfolgt beispielsweise durch saure Kupplung von diazotiertem

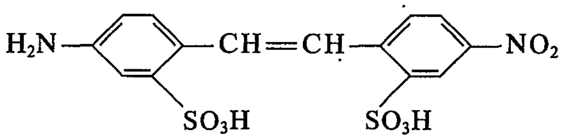

(V)

auf

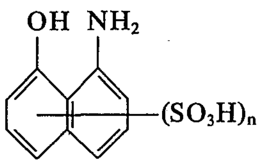

(VI)

zu

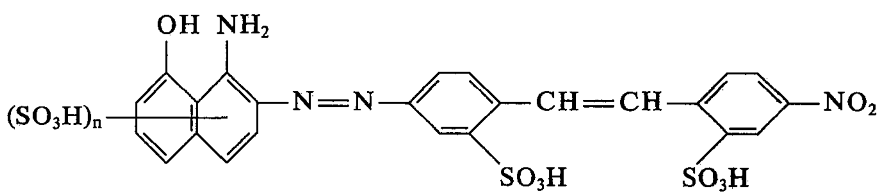

(VII)

und folgende alkalische Kupplung mit diazotierten Aminen

$$D{-}NH_2 \quad \text{(VIII)}$$

zu

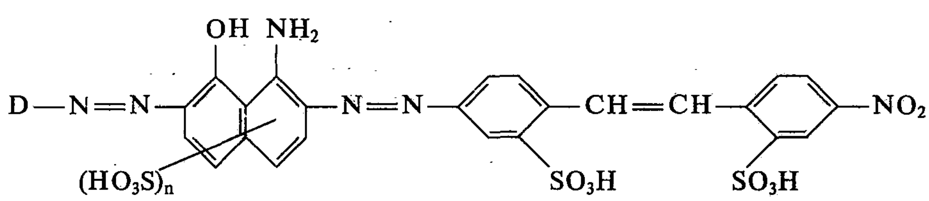

(IVa)

Auch die Verbindungen (VII) sind Gegenstand der Erfindung.

Ein weiteres Verfahren ist folgendes:

(V) wird diazotiert und auf durch saure Kupplung hergestellte Azofarbstoffe

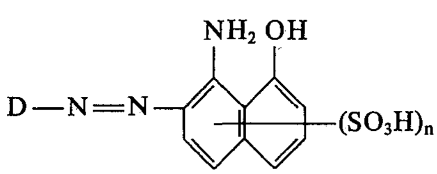

(IX)

gekuppelt zu

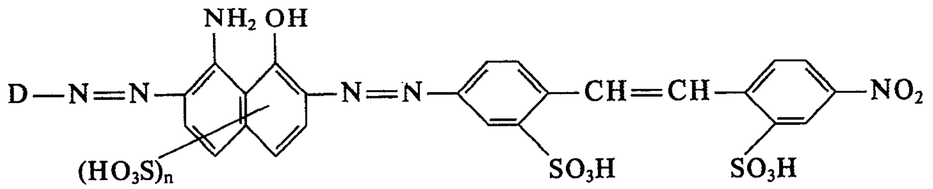 (IVb)

B. Durch reduktive Verknüpfung zweier Moleküle (V) erhaltenes

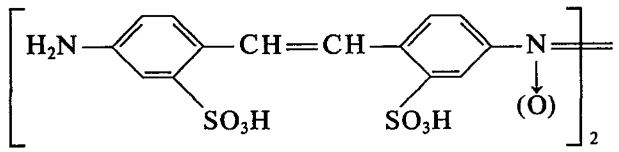 (X)

wird tetrazotiert, sauer auf (VI) gekuppelt zu

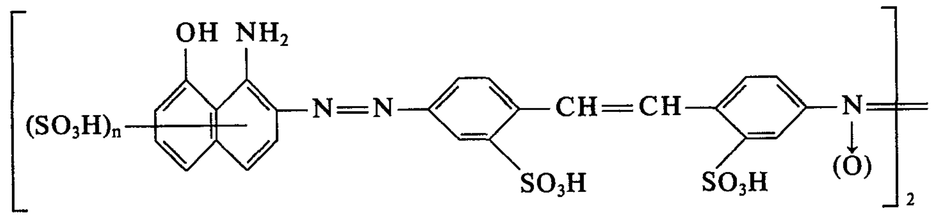 (XI)

und dieses alkalisch gekuppelt mit 2 Mol diazotiertem (VIII) oder durch reduktive Verknüpfung von 2 Mol VII zu XI und alkalische Kupplung mit 2 Mol diazotiertem VIII.

Die Verbindungen (XI) sind ebenfalls Gegenstand der Erfindung.

Als 1-Amino-8-hydroxynaphthalinsulfonsäuren (VI) kommen in Betracht: die 4- oder 5-Monosulfonsäure, die 3,5- oder die 4,6-disulfonsäure und vorzugsweise die 3,6-disulfonsäure (H-Säure).

Als geeignete Verbindungen (VIII) seien beispielhaft genannt:

Anilin, 3- oder 4-Toluidin, 2-, 3- oder 4-Methoxyanilin, 2-, 3- oder 4-Monochlor- oder 2,5- oder 3,4-dichloranilin, 3- oder 4-Anilin-sulfonsäure, 2-, 3- oder 4-Amino-benzoesäure, Sulfanilamid, 4-Aminoazobenzol, 4-Aminoazobenzol-4'-sulfonsäure, 3-Methoxy-4-aminoazobenzol-3'-sulfonsäure, 4-Acylaminoanilin (Acyl = Formal, Acetyl, Cl-Acetyl, Propionyl, Benzoyl, Tosyl, Benzolsulfonyl), 2,5-Dichloranilin-4-sulfonsäure, 2-Methoxyanilin-4-sulfonsäure, Dehydrothiotoluidin und Monosulfonsäure, 1-Aminonaphthalin, 1-Aminonaphthalin-4-, -5-, -6- oder -7-monosulfonsäure, 2-Aminonaphthalin-5- oder -6-sulfonsäure, 3- oder 4-Nitroanilin, 4-Nitranilin-2-sulfonsäure.

Die neuen Farbstoffe I–IV, VII und XI sind geeignet zum Färben und Bedrucken von amino- und hydroxygruppenhaltigen Fasermaterialien und von Leder. Besonders geeignet sind die Farbstoffe I, II und III zum Färben von Cellulose-Materialien vorzugsweise Baumwolle, regenerierten Materialien und Papier. Die Farbstoffe sind gut löslich und im allgemeinen kaum härteempfindlich.

Die Färbungen beispielsweise auf Cellulose besitzen gute Naß- und Gebrauchseigenschaften und sind stabil bei der Knitterfestausrüstung und bei der Nachbehandlung mit kationischen Hilfsmitteln zur Naßechtheits-Verbesserung.

Farbstoffe der Formel XI sind zum Färben von Cellulosematerialien geeignet und können auf der Faser mit diazotierten Aminen (VIII) nachbehandelt werden.

Farbstoffe der Formel IV eignen sich vorzugsweise zum Färben von Leder und Papier nach den üblichen Färbeverfahren.

Farbstoffe der Formel VII sind vorzugsweise geeignet zum Färben und Bedrucken von amidgruppenhaltigen Materialien wie Seide, Wolle oder Polyamiden; die Färbungen bzw. Drucke können anschließend mit Diazoniumverbindungen gekuppelt werden.

Die Farbstoffe werden vorzugsweise in Form ihrer Salze oder Salzgemische (Natrium, Kalium, Ammonium, Lithium) verwendet, doch ist grundsätzlich auch eine Verwendung als konzentrierte Farbstofflösung möglich, beispielsweise in wassermischbaren organischen Lösungsmitteln, gegebenenfalls im Gemisch mit Wasser oder in Wasser gegebenenfalls in Anwesenheit von Lösungsvermittlern wie beispielsweise Harnstoff.

In der französischen Patentschrift 1 523 475 werden Cellulose-Farbstoffe beschrieben, die im Gegensatz zu den erfindungsgemäßen Farbstoffen jedoch nur zwei Azogruppen und eine Azoxygruppe aufweisen und auch nicht das Hydroxyaminonaphthalinsulfonsäure-Gerüst enthalten, dafür jedoch zwingend zwei Sulfo-naphthotriazol-Reste.

Beispiel 1

42,2 Teile (0,1 Mol) 4'-Nitro-4-aminostilben-2,2'-disulfonsäure-Mononatriumsalz werden in 350 Teilen Wasser neutral bei 80° C gelöst und in üblicher Weise mit 23 Teilen 30%iger Natriumnitritlösung indirekt bei Raumtemperatur diazotiert. Nach beendeter Diazotierung wird überschüssige salpetrige Säure mit Amidosulfonsäure zerstört.

34,1 Teile (0,1 Mol) 1-Amino-8-hydroxynaphthalin-3,6-disulfonsäure-Mononatriumsalz (H-Säure) werden in etwa 60 Teilen Wasser bei Raumtemperatur mit etwa 9 Teilen 40%iger Natronlauge gelöst, dann mit 6 Teilen 28%iger Salzsäure angesäuert, wobei die H-Säure zum größten Teil ausfällt. Diese H-Säure-Suspension wird mit dem obigen Diazoniumsalz-Gemisch vereinigt und durch Zutropfen von etwa 180 Teilen 10%iger Natriumbikarbonatlösung ein pH-Wert von 2,5 bis 3 eingehalten bis die saure H-Säure-Kupplung beendet ist (1. Stufe).

Zur erhaltenen Kupplungslösung gibt man die Diazoniumsalz-Lösung von 19,7 Teilen (0,1 Mol) 4-Aminoazobenzol zu, die in üblicher Weise durch direktes Diazotieren des Aminobenzols in etwa 400 Teilen Wasser und 35 Teilen 28%iger Salzsäure mit etwa 25 Teilen 30%iger Natriumnitritlösung bei 0° C hergestellt wird.

Man tropft zur Kupplung etwa 230 Teile 20%ige Sodalösung zu (pH 9 bis 9,5) und rührt, bis die Kupplung der zweiten Stufe beendet ist.

Zur Zusammenreduktion wird die erhaltene Farbstofflösung mit 120 Teilen 40%iger Natronlauge versetzt, auf 70° C erwärmt und die Lösung von 12 Teilen Traubenzucker in 40 Teilen Wasser zugegeben. Man rührt 30 Minuten bei 70° C, bis die Kondensation beendet ist.

Der erhaltene Farbstoff wird in üblicher Weise mit Natriumchlorid ausgesalzen, isoliert und getrocknet. Der getrocknete Farbstoff stellt ein dunkles Pulver dar, das sich in Wasser mit dunkelgrüner Farbe löst und Baumwolle in dunkelgrünen Tönen färbt.

Verwendet man anstelle des 4-Aminoazobenzols die äquimolare Menge an Anilin oder 4-Acetylaminoanilin oder 4-Methoxyanilin oder 2,5-Dichloranilin oder 3- oder 4-Anilinsulfonsäure oder 4-Aminoazobenzol-4'-sulfonsäure oder Dehydrothiotoluidinsulfonsäure als Diazokomponente, so erhält man nach der Kupplung und Zusammenreduktion Farbstoffe, die sich in Wasser mit dunkelgrüner Farbe lösen und Baumwolle dunkelgrün färben.

Beispiel 2

42,2 Teile (0,1 Mol) 4'-Nitro-4-aminostilben-2,2'-disulfonsäure Mono-Natriumsalz werden wie in Beispiel 1 beschrieben diazotiert und mit 0,1 Mol H-Säure sauer zum o-Aminoazofarbstoff gekuppelt (Stufe 1).

Die erhaltene Farbstofflösung wird nun mit 3% des Volumens 40%iger Natronlauge versetzt, auf 65° C aufgeheizt und mit der Lösung von 12 Teilen Traubenzucker in 40 Teilen Wasser 30 Minuten bei 70° C gerührt, bis die Zusammenreduktion beendet ist.

Dieses Farbstoffzwischenprodukt wird in üblicher Weise mit Natriumchlorid ausgesalzen und isoliert.

Die erhaltene Farbstoffzwischenproduktpaste wird in etwa 1500 Teilen Wasser gelöst und nach Zugabe von 140 Teilen 20%iger Sodalösung mit der Diazoniumsalzlösung von 0,1 Mol 4-Nitranilin vereinigt. Nach beendeter Kupplung wird der Farbstoff mit Natriumchlorid isoliert und getrocknet. Er stellt ein dunkles Pulver dar, das sich in Wasser mit grüner Farbe löst. Baumwolle wird in dunkelgrünen Tönen gefärbt.

Verwendet man anstelle der Diazoniumsalzlösung des 4-Nitranilins die Diazoniumsalzlösung des Analins oder 3-Nitranilins, 3-Chloranilins, 4-Methylanilins, der 4-Nitranilin-2-sulfonsäure, 4-Amino-diphenylamin-2-sulfonsäure, 4-Amino-2'- oder -4'-methoxy-diphenylamin-2-sulfonsäure, so erhält man Farbstoffe, die Baumwolle in dunkelgrünen Tönen färben.

Beispiel 3

Verwendet man als Aminohydroxynaphthalinsulfonsäure-Kupplungskomponente anstelle von 1-Amino-8-hydroxynaphthalin-3,6-disulfonsäure (H-Säure) die 1-Amino-8-hydroxynaphthalin-4,6-disulfonsäure und verfährt in analoger Weise wie im Beispiel 1 bzw. 2 beschrieben, so erhält man Farbstoffe, die Baumwolle in dunkelgrünen Tönen färben.

Beispiel 4

Verwendet man 1-Amino-8-hydroxynaphthalin-4-sulfonsäure als Kupplungskomponente, so erhält man nach analoger Arbeitsweise wie in den Beispielen 1 oder 2 beschrieben Farbstoffe, die Baumwolle in dunkel- bis schwarzgrünen Tönen färben.

Beispiel 5

0,1 Mol des Monoazofarbstoffs [Anilin → H-Säure] werden neutral in 700 Teilen Wasser gelöst und mit 0,1 Mol der Diazoniumverbindung der 4'-Nitro-4-aminostilben-2,2'-disulfonsäure hergestellt nach den Angaben des Beispiel 1 sodaalkalisch bei Raumtemperatur gekuppelt. Der Diazofarbstoff fällt aus und wird isoliert. Zur Zusammenreduktion wird die Paste in 800 Teilen Wasser verrührt, mit 3% des Volumens 40%iger Natronlauge versetzt und bei 65° mit der Lösung von 11 Teilen Traubenzucker in 40 Teilen Wasser 30 Minuten behandelt. Der erhaltene Farbstoff wird mit Natriumchlorid isoliert und getrocknet. Der getrocknete Farbstoff stellt ein dunkles Pulver dar, das sich in Wasser mit blaugrüner Farbe löst und Baumwolle in blaugrünen Tönen färbt.

Verwendet man anstelle von 0,1 Mol des Farbstoffs Anilin $\xrightarrow{s}$ H-Säure die äquimolare Menge des Farbstoffs 2,5-Dichloranilin $\xrightarrow{s}$ H-Säure (1) oder p-Nitranilin $\xrightarrow{s}$ H-Säure (2) oder 4-Aminoanilin $\xrightarrow{s}$ H-Säure (3) als Kupplungskomponente, so erhält man nach analoger Arbeitsweise wie oben bei (1) einen blaugrünen, bei (2) einen schwarzgrünen, bei (3) einen blaugrünen Farbstoff (s = saure Kupplung).

## Patentansprüche

1. Polyazofarbstoffe der Formel

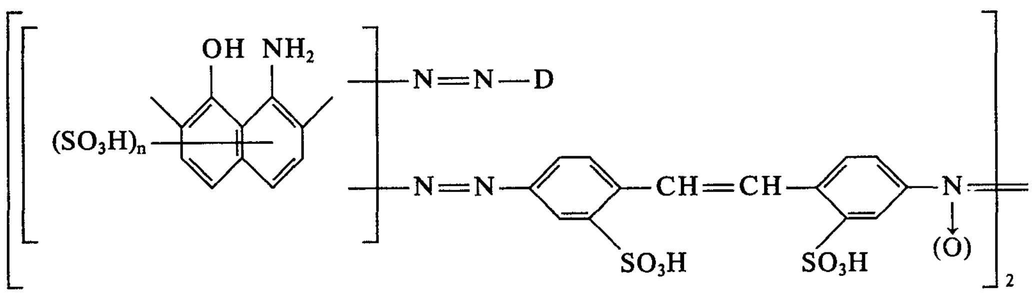

(I)

worin

D = Rest einer Diazokomponente
n = 1 oder 2.

2. Polyazofarbstoffe der Formel

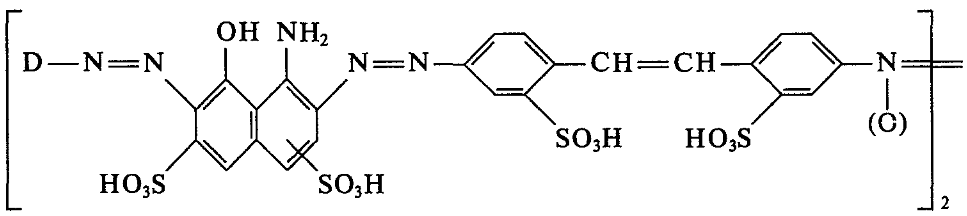

(II)

worin

D = Rest einer Diazokomponente.

3. Polyazofarbstoffe der Formel

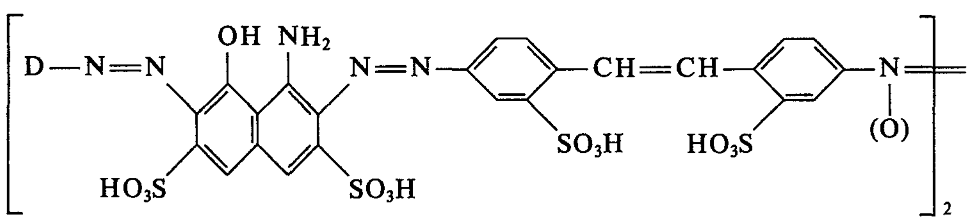

(III)

worin

D = Rest einer Diazokomponente.

4. Polyazofarbstoffe der Formel

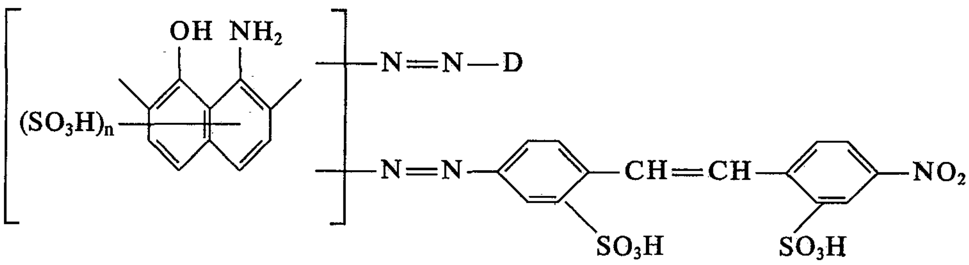

worin

D = Rest einer Diazokomponente

n = 1 oder 2.

5. Azofarbstoffe der Formel

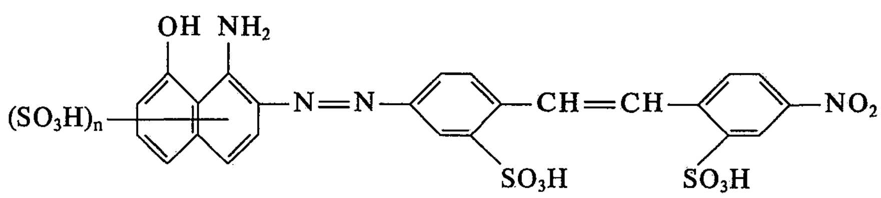

n = 1 oder 2.

6. Polyazofarbstoffe der Formel

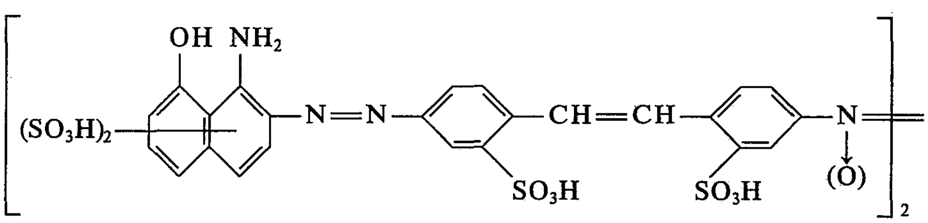

7. Polyazofarbstoffe der Formel

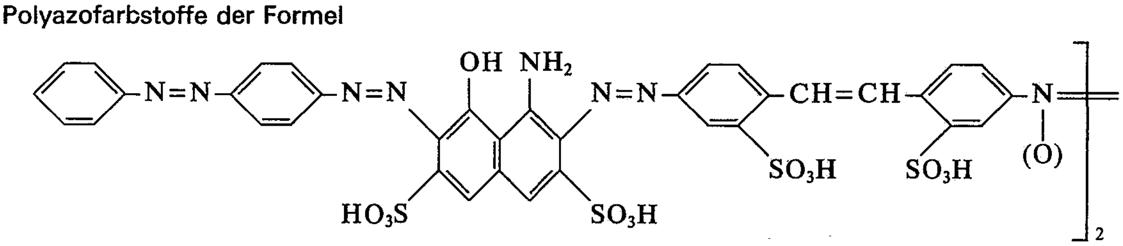

8. Verwendung der Farbstoffe der Ansprüche 1–6 zum Färben von amino- und hydroxygruppenhaltigen Fasermaterialien und Leder.

**Claims**

1. Polyazo dyestuffs of the formula

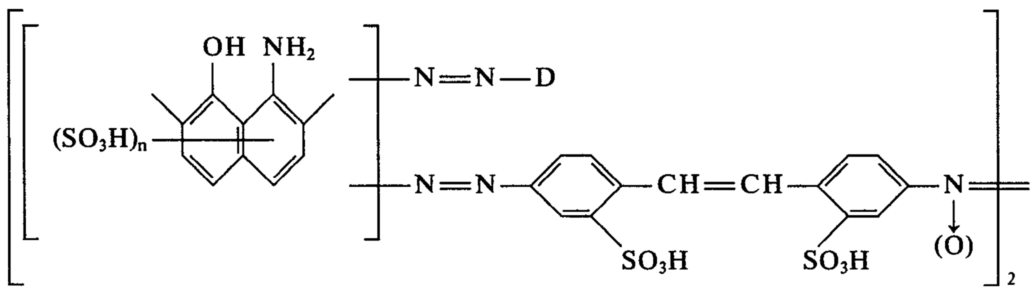

(I)

wherein

D = the radical of a diazo component and
n = 1 or 2.

2. Polyazo dyestuffs of the formula

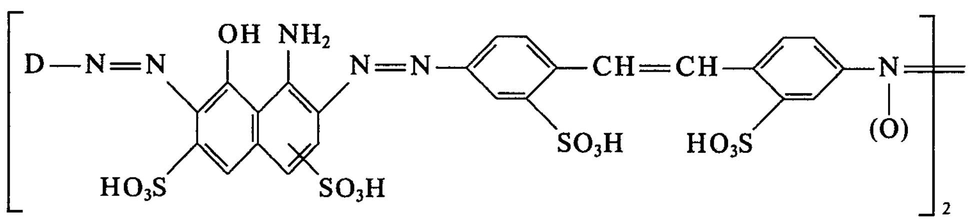

(II)

wherein

D = the radical of a diazo component.

3. Polyazo dyestuffs of the formula

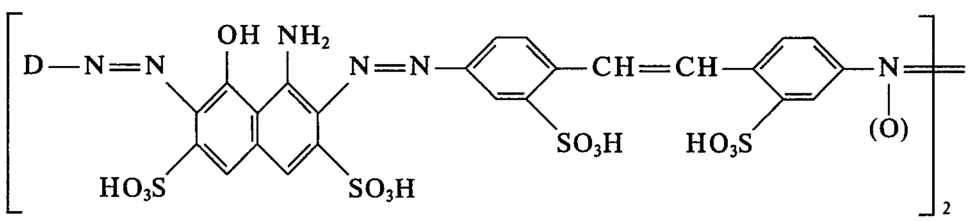

(III)

wherein

D = the radical of a diazo component.

4. Polyazo dyestuffs of the formula

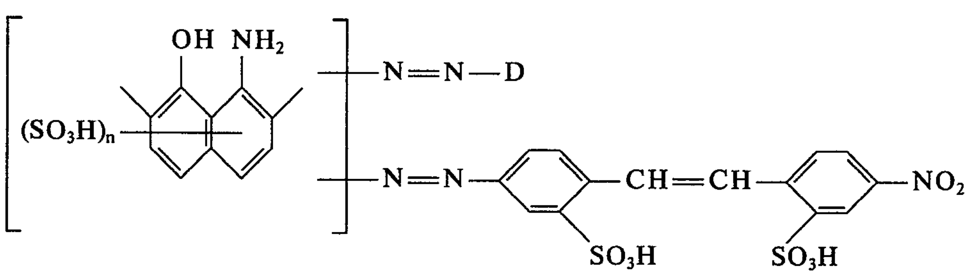

wherein

D = the radical of a diazo component and

n = 1 or 2.

5. Azo dyestuffs of the formula

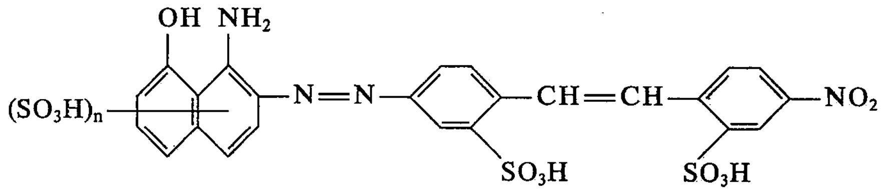

n = 1 or 2.

6. Polyazo dyestuffs of the formula

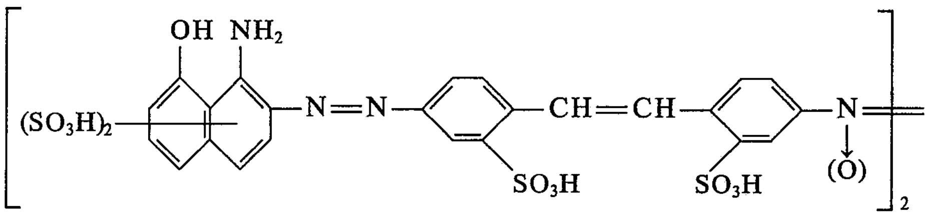

7. Polyazo dyestuffs of the formula

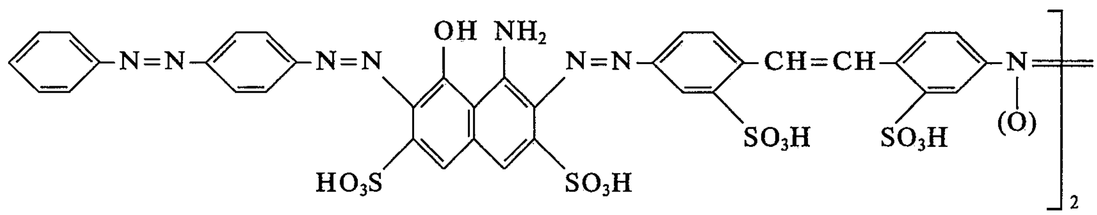

8. Use of the dyestuffs of Claims 1–6 for dyeing fibre materials containing amino groups and hydroxyl groups, and leather.

## Revendications

1. Colorants polyazoïques de formule:

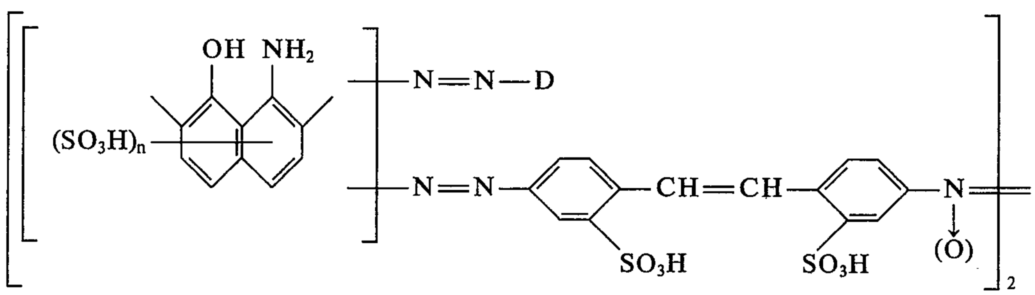

(I)

dans laquelle:

D = reste d'un composant diazotable
n = 1 ou 2.

2. Colorants polyazoïques de formule:

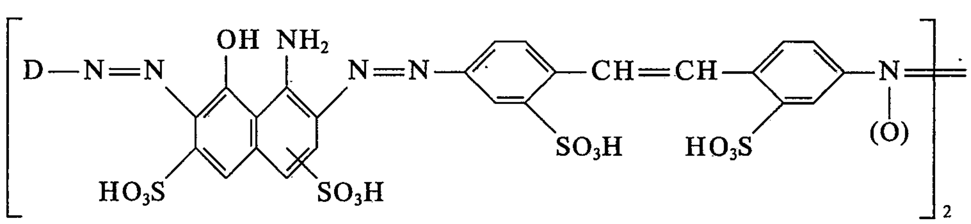

(II)

dans laquelle:

D = reste d'un composant diazotable.

3. Colorants polyazoïques de formule:

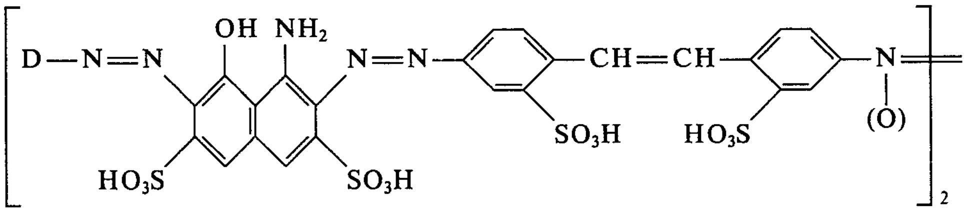 (III)

dans laquelle:

D = reste d'un composant diazotable.

4. Colorants polyazoïques de formule:

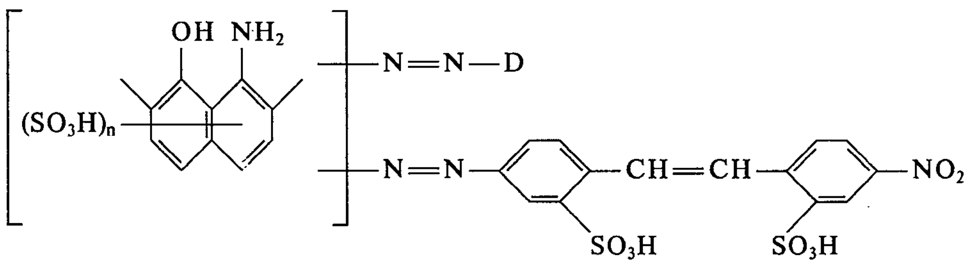

dans laquelle:

D = reste d'un composant diazotable

n = 1 ou 2.

5. Colorants azoïques de formule:

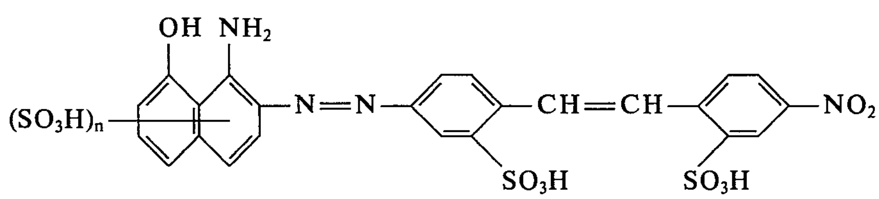

n = 1 ou 2.

6. Colorants polyazoïques de formule:

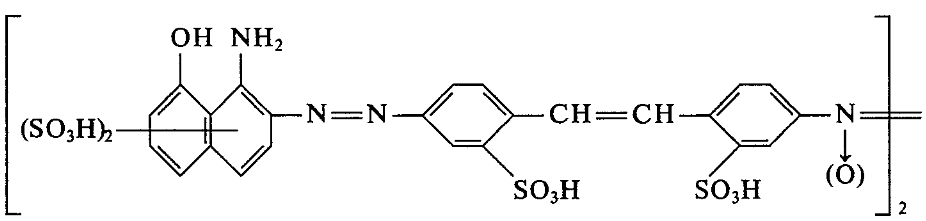

7. Colorants polyazoïques de formule:

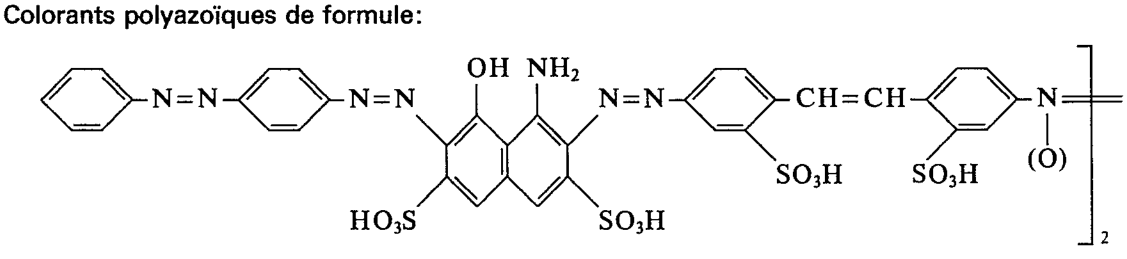

8. Utilisation des colorants selon les revendications 1 à 6 pour la teinture des matières fibreuses des groupes amino et hydroxy et du cuir.